# EUROPÄISCHE PATENTSCHRIFT

(11) **EP 0 561 835 B1**
(45) Veröffentlichungstag und Bekanntmachung des Hinweises auf die Patenterteilung: **06.09.1995**
(21) Anmeldenummer: 91920739.9
(22) Anmeldetag: 03.12.1991
(51) Int. Cl.: C09J 1/02, C04B 22/00

(54) **BINDEMITTEL AUF BASIS WÄSSRIGER ALKALIMETALLSILICATLÖSUNGEN UND DEREN VERWENDUNG**
BINDERS BASED ON AQUEOUS ALKALINE METAL SILICATE SOLUTIONS AND THEIR USE
LIANTS A BASE DE SOLUTIONS AQUEUSES DE SILICATES DE METAUX ALCALINS ET APPLICATION

(30) Priorität: 15.12.1990 DE 4040153
(43) Veröffentlichungstag der Anmeldung: 29.09.1993
(73) Patentinhaber: Henkel Kommanditgesellschaft auf Aktien, 40191 Düsseldorf (DE)
(72) Erfinder: SCHÜLLER, Franz-Josef, D-4019 Monheim 2 (DE)
(86) Internationale Anmeldenummer: EP9102293
(87) Internationale Veröffentlichungsnummer: WO9210552

(56) Entgegenhaltungen:
- FR-A- 2 295 103
- PATENT ABSTRACTS OF JAPAN, vol. 010, no. 230 (C-365), 5. April 1986; & JP-A-61 066 767

## Beschreibung

Die vorliegende Erfindung betrifft temperaturbeständige anorganische Bindemittel oder Klebstoffe auf Basis von wäßrigen Alkalimetallsilicatlösungen mit einem Gehalt an anorganischen Zusatzstoffen, welche die Bindefähigkeit oder Klebkraft derartiger Bindemittel verbessern. Weiterhin betrifft die Erfindung die Verwendung derartiger Bindemittel oder Klebstoffe insbesondere zum Verkleben von Metallen, Keramik und/oder Glas.

In temperaturbeständigen Bindemitteln oder Klebstoffen, die auch im Temperaturbereich von ca. 300 °C bis 600 °C noch ausreichend stabil sein sollen, können praktisch nur anorganische Materialien eingesetzt werden, um die geforderten Dauertemperaturbeständigkeiten zu erreichen. Als Basis für derartige Bindemittel werden im Stand der Technik insbesondere wäßrige Alkalimetallsilicatlösungen, das heißt Wasserglaslösungen, verwendet. Als weitere Komponenten derartiger Bindemittel, z. B. als Füllstoffe, kommen eine Reihe von weiteren anorganischen Verbindungen in Frage. Beispielhaft hierfür seien genannt: Quarzsand, Ton, Talkum, Bentonite, Glaspulver, Asbest, Kaolin sowie Oxide des Aluminiums, Zinks oder Magnesiums.

Solche temperaturbeständigen Bindemittel eignen sich insbesondere zur Verklebung von Metallen, von Glas oder Keramik. Beispielhaft seien hier als Haupteinsatzgebiete isolierende Verklebungen von stromführenden Drähten, Spulen oder Heizelementen in der Elektroindustrie sowie ferner in der Glasindustrie als Schutzbeschichtungen für Preßformen genannt.

Derartige Bindemittelformulierungen auf der Basis wäßriger Alkalimetallsilicatlösungen sind seit langem bekannt und werden im Stand der Technik auch im breiten Maße beschrieben. Als Beispiele für einschlägige Bindemittelformulierungen auf Wasserglas-Basis, die aus dem Stand der Technik bekannt sind, werden die nachstehenden Literaturzitate angegeben:

In der JP-A-80/155 072 werden anorganische Klebstofformulierungen auf der Basis von wäßrigen Alkalimetallsilicatlösungen beschrieben, welche ein wasserfreies, pulverförmiges Alkalimetallsilicat, anorganische Füllstoffe, einen Härter und ferner Polyole und/oder die Emulsion eines organischen Harzes enthalten. Als anorganische Füllstoffe kommen hierbei Quarzsand, Ton, Calciumcarbonat, Talkum oder Bentonit in Frage. Derartige Klebstoffe zeichnen sich durch erhöhte Wasser- und Feuerbeständigkeit aus.

Aus der JP-A-87/132 982 ist ein wasserfester und hitzebeständiger Klebstoff bekannt, der auf einer mit organischen Harzen modifizierten Alkalimetallsilicatlösung basiert. Derartige Klebstoffe enthalten als Füllstoffe beispielsweise Calciumcarbonat, Quarz, Talkum, Ton, Aluminiumhydroxid, Glaspulver oder Asbestfasern.

In der SU-A-834 069 wird ein Klebstoff auf Wasserglas-Basis beschrieben, der amorphes Bor und Natriumaluminat enthält. Auch derartige Klebstoffe sollen gegen höhere Temperaturen beständig sein.

Die SU-A-829 599 beschreibt hitzebeständige Klebstoffe auf Wasserglas-Basis, die als Füllstoffe Korund, Asbest oder Talkum-Pulver enthalten.

In der SU-A-857 203 werden hitzebeständige Klebstoffe für die Verklebung von Metallen beschrieben, die neben Natriumsilicatlösungen ferner Ölsäure-triethanolaminsalz, Zinkoxid und Asbestfasern enthalten.

Die RO-A-70 001 beschreibt nicht-brennbare Klebstoffe auf der Basis von Alkalimetallsilicatlösungen, welche neben Kaolin und Asbestfasern ferner organische Additive, wie Stärkeester und Silicone, enthalten.

Neben den vorstehend angeführten Zusatzstoffen für solche Bindemittelformulierungen auf Wasserglas-Basis ist aus dem Stand der Technik ferner bekannt, auch pulverförmige Metalle als Zusatzstoffe bzw. Füllstoffe zu verwenden. So beschreibt die EP-A-295 834 einen temperaturbeständigen Klebstoff zum Verkleben von Metallen oder Keramik auf der Basis von Alkalimetallsilicatlösungen, welcher kolloidales SiO₂, Aluminiumoxid und pulverförmiges Aluminium enthält.

Auch die JP-A-54/133 526 beschreibt eine temperaturbeständige Klebstofformulierung auf Basis von Natriumsilicat, die ferner einen Gehalt an feinteiligem, pulverförmigem Aluminium aufweist.

Aus der JP-A-86/40 874 sind temperaturbeständige Klebstoffe zum Verkleben von keramischem Material bekannt, die Alkalimetallsilicatlösungen zusammen mit pulverförmigen Metallen, wie Aluminium, Silicium, Eisen, Kobalt oder Chrom, und ferner Graphit-Pulver enthalten.

Schließlich beschreibt die JP-A-88/182 269 temperaturbeständige Klebstoffe auf Wasserglas-Basis, die einen Gehalt an faserförmigen Metallen aufweisen.

Die bekannten anorganischen Bindemittel oder Klebstoffe auf Basis wäßriger Alkalimetallsilicatlösungen weisen jedoch in der Regel keine ausreichende Bindefestigkeit der miteinander verklebten Substrate auf, das heißt derartigen Bindemittelformulierungen ermangelt es an ausreichender Klebkraft. Die Aufgabe der vorliegenden Erfindung bestand mithin darin, temperaturbeständige Bindemittel auf der Basis wäßriger Alkalimetallsilicatlösungen, das heißt Wasserglaslösungen, zu entwickeln, die nach dem Aushärten eine verbesserte Bindefestigkeit oder Klebkraft aufweisen.

Dementsprechend betrifft die vorliegende Erfindung Bindemittel auf Basis wäßriger Alkalimetallsilicatlösungen, die ein Molverhältnis SiO₂ zu M₂O im Bereich von (2,0 bis 4,1):1 und einen Feststoffgehalt im Bereich von 27 bis 56 Gew.-% aufweisen, wobei M Natrium, Kalium und/oder Lithium bedeuten, mit einem Gehalt an anorganischen Zusatzstoffen, welche dadurch gekennzeichnet sind, daß sie 2 bis 20 Gew.-%, bezogen auf die Alkalimetallsilicatlösung, an Doppelschichthydroxid-Verbindungen der allgemeinen Formel (I)

[M^{II}₁₋ₓM^{III}ₓ(OH)₂]Aₓ . mH₂O (I)

worin M^{II} mindestens ein zweiwertiges Metallkation, M^{III} mindestens ein dreiwertiges Metallkation, A das Äquivalent eines Anions einer ein- oder mehrbasischen Säure, 1/6 ≦ x ≦ 1/2 und 0 ≦ m ≦ 1 bedeuten, und/oder zuvor calcinierte Doppelschichthydroxid-Verbindungen der allgemeinen Formel (I) enthalten.

Überraschenderweise wurde festgestellt, daß beim Einsatz der genannten Doppelschichthydroxid=Verbindungen der allgemeinen Formel (I) oder von zuvor calcinierten Doppelschichthydroxid-Verbindungen der allgemeinen Formel (I) in Bindemitteln oder Klebstoffen auf Wasserglas-Basis die Zugscherfestigkeit von Verklebungen gegenüber bekannten Produkten des Standes der Technik deutlich verbessert wird. Dies ist umso überraschender, als ähnliche Zusatzstoffe, beispielsweise schichtförmige Magnesiumsilicate, keine entsprechende Verbesserung erbrachten. Die erfindungsgemäßen Bindemittel weisen ferner eine ausgezeichnete Temperaturbeständigkeit auf, das heißt die mit den erfindungsgemäßen Bindemitteln erzielten Verklebungen sind auch in Temperaturbereichen von etwa 300 °C bis 600 °C hinreichend stabil.

Wesentlicher Bestandteil der erfindungsgemäßen Bindemittel oder Klebstoffe sind die Doppelschichthydroxid-Verbindungen der allgemeinen Formel (I) beziehungsweise zuvor calcinierte Doppelschichthydroxid-Verbindungen dieser allgemeinen Formel.

Diese sogenannten "Doppelschichthydroxid-Verbindungen" sind in der Literatur, beispielsweise aus R. Allmann, Chimia 24 (1970), Seiten 99 bis 108, bekannt. Chemisch stellen sie gemischte basische Hydroxosalze zwei- und dreiwertiger Metallkationen dar. In der Wahl der zweiwertigen und dreiwertigen Metallkationen bestehen prinzipiell keine Beschränkungen. Bestimmte zweiwertige und dreiwertige Metallkationen sowie besondere Kombinationen sind aus der DE-A-20 61 114 sowie der DE-A-20 61 156 bekannt.

Bevorzugt im Sinne der Erfindung wird das zweiwertige Metallkation der Formel (I) ausgewählt aus Magnesium, Calcium, Mangan, Zink und Kupfer. Das dreiwertige Metallkation der Formel (I) wird bevorzugterweise ausgewählt aus Eisen und Aluminium. Wenn vorstehend - im Zusammenhang mit der Erläuterung der allgemeinen Formel (I) - von mindestens einem zweiwertigen und dreiwertigen Metallkation die Rede ist, so bedeutet dies, daß in derartigen Doppelschichthydroxid-Verbindungen gegebenenfalls jeweils mehrere zweiwertige beziehungsweise dreiwertige Metallkationen nebeneinander vorliegen können.

Im Sinne der vorliegenden Erfindung ist es ferner bevorzugt, daß das Anion A der Formel (I) ausgewählt ist aus Carbonat-, Sulfat-, Chlorid-, Nitrat- und Phosphationen. Aufgrund der außerordentlich großen Verbreitung von Carbonationen auch bei natürlich vorkommenden Doppelschichthydroxid-Verbindungen sind Carbonationen besonders bevorzugt.

Ein Prototyp bevorzugter kationischer Doppelschichthydroxid-Verbindungen ist das Mineral Hydrotalcit, das die folgende Idealformel besitzt:

[Mg₆Al₂(OH)₁₆]CO₃ x 4 H₂O

Die vorstehende Idealformel entspricht der allgemeinen Formel (I), sofern man die Idealformel auf "(OH)₂" normiert, das heißt alle Indices durch die Zahl 8 dividiert.

Hydrotalcit leitet sich strukturell von Brucit [Mg(OH)₂] ab. Brucit kristallisiert in einer Schichtstruktur mit den Metallionen in Oktaederlücken zwischen zwei Schichten aus dichtgepackten Hydroxidionen, wobei jedoch nur jede zweite Schicht der Oktaederlücken besetzt ist. Im Hydrotalcit erhält das Schichtpaket dadurch eine positive Ladung, daß einige Magnesiumionen durch Aluminiumionen substituiert sind. Diese positive Ladung wird durch Anionen kompensiert, die sich zusammen mit Kristallwasser in den Zwischenschichten befinden. Der Schichtaufbau wird aus Röntgenbeugungsdiagrammen deutlich, die ebenfalls zur Charakterisierung herangezogen werden können (JCPDS-Kartei: 22-700). Bedingt durch die unterschiedlichen Zusammensetzungen, auch bezüglich des Wassergehaltes, sind Linienverbreiterungen und -verschiebungen im Röntgenbeugungsdiagramm zu erklären.

Synthetisch hergestellte Hydrotalcite sind allgemein bekannt, u.a. werden sie beschrieben in DE-A-15 92 126, DE-C-33 06 822, DE-A-33 46 943 und EP-A 0 207 811. In der EP-A 0 207 811 wird ein besonders feinteiliges Produkt beschrieben, das bei einer Conti-Fällung ( flash-Fällung) entsteht, wenn man die Ausgangslösungen (Metallsalz-Lösung und alkalische Carbonat-Lösung) kontinuierlich zusammenströmen läßt, anschließend filtriert, wäscht und das Produkt im feuchten Zustand beläßt.

Weitere Beispiele für an sich bekannte Doppelschichthydroxid-Verbindungen der allgemeinen Formel (I) sind: Pyroaurit [Mg₆Fe₂(OH)₁₆]CO₃ x 4.5 H₂O, Magaldrat [Mg₁₀Al₅(OH)₃₁](SO₄)₂ x m H₂O und [Zn₆Al₂(OH)₁₆]CO₃ x m H₂O.

Die erfindungsgemäßen Bindemittel oder Klebstoffe können anstelle von oder zusammen mit den Doppelschichthydroxid-Verbindungen der allgemeinen Formel (I) auch zuvor calcinierte Doppelschichthydroxid-Verbindungen dieser allgemeinen Formel enthalten. Natürliche und synthetische Doppelschichthydroxid-Verbindungen geben beim Erhitzen bzw. Calcinieren kontinuierlich Wasser ab. Das Kristallwasser wird vollständig bei 200 °C entfernt, höhere Temperaturen führen zur Abspaltung von Wasser aus dem Hydroxidgerüst und von Kohlendioxid aus dem als üblichem Anion enthaltenen Carbonat. Die Strukturen der Doppelschichthydroxid-Verbindungen werden bei diesem Vorgang abgebaut, die Röntgenbeugungsdiagramme zeigen nur breite und wenig charakteristische Linien für Periklas (MgO).

Ein Prototyp derartiger Verbindungen ist beispielsweise calcinierter Hydrotalcit, von dem auch im Stand der Technik, beispielsweise der DE-A-30 19 632, die Anionenaufnahme unter Rückbildung der Schichtverbindung prinzipiell bekannt ist. Ausgehend von Doppelschichthydroxid-Verbindungen der allgemeinen Formel (I), die bei Temperaturen von oberhalb 200 °C calciniert werden, gelangt man somit zu den entsprechenden calcinierten Produkten, die im Sinne der Erfindung gleichfalls Verwendung finden können.

In einer bevorzugten Ausführungsform der vorliegenden Erfindung werden somit als Doppelschichthydroxid-Verbindung der allgemeinen Formel (I) Hydrotalcit oder ein zuvor calcinierter Hydrotalcit eingesetzt.

Als im Sinne der Erfindung zu verwendende wäßrige Alkalimetallsilicatlösungen kommen handelsübliche Wasserglaslösungen in Frage, wobei das Alkalimetall aus der Gruppe Natrium, Kalium und/oder Lithium ausgewählt ist. Mit anderen Worten heißt dies, daß handelsübliche Natronwassergläser, Kaliwassergläser oder Lithiumwassergläser sowie auch deren Gemische für die Zwecke der Erfindung Verwendung finden können. Derartige handelsübliche Wassergläser, die erfindungsgemäß eingesetzt werden, weisen in der Regel ein Molverhältnis SiO₂ zu M₂O im Bereich von (2,0 bis 4,1):1 und einem Feststoffgehalt im Bereich von 27 bis 56 Gew.-% auf, wobei M Natrium, Kalium und/oder Lithium bedeuten.

Im Sinne der Erfindung werden bevorzugt solche wäßrige Alkalimetallsilicatlösungen eingesetzt, die ein Molverhältnis von SiO₂ zu M₂O im Bereich von (2,0 bis 3,5):1 und einen Feststoffgehalt im Bereich von 33 bis 56 Gew.-% aufweisen, wobei M Natrium oder Kalium bedeutet.

Nach einer bevorzugten Ausführungsform der vorliegenden Erfindung werden als wäßrige Alkalimetallsilicatlösungen Natronwasserglaslösungen eingesetzt, die ein Molverhältnis SiO₂ zu Na₂O im Bereich von (2,0 bis 3,2):1 und einen Feststoffgehalt im Bereich von 41 bis 56 Gew.-% aufweisen.

Die Einsatzmenge der erfindungsgemäß zu verwendenden Doppelschichthydroxid-Verbindungen der allgemeinen Formel (I) bzw. der entsprechenden, zuvor calcinierten Doppelschichthydroxid-Verbindungen richtet sich insbesondere nach den mit den erfindungsgemäßen Bindemitteln zu verklebenden Substraten. Der Fachmann kann hier durch Ausprobieren die optimale Zusatzmenge leicht ermitteln. Gemäß einer weiteren, bevorzugten Ausführungsform der vorliegenden Erfindung enthalten die Bindemittel jedoch 5 bis 15 Gew.-%, bezogen auf die wäßrige Alkalimetallsilicatlösung, an feinteiligen Doppelschichthydroxid-Verbindungen der allgemeinen Formel (I) oder an zuvor calcinierten Doppelschichthydroxid-Verbindungen dieser Formel.

Im Sinne der Erfindung ist es ferner bevorzugt, daß die erfindungsgemäß zu verwendenden Doppelschichthydroxid-Verbindungen bzw. derartige zuvor calcinierte Doppelschichthydroxid-Verbindungen in möglichst feinteiliger Form in den erfindungsgemäßen Bindemitteln eingesetzt werden. In diesem Sinne ist es erfindungsgemäß bevorzugt, daß die feinteiligen Doppelschichthydroxid-Verbindungen der allgemeinen Formel (I) oder die zuvor calcinierten Doppelschichthydroxid-Verbindungen dieser Formel eine Korngröße im Bereich von 1 bis 30 µm, insbesondere im Bereich von 3 bis 10 µm, aufweisen.

Sofern die erfindungsgemäßen Bindemittel insbesondere zum Verkleben von Metalloberflächen eingesetzt werden, kann es von Vorteil sein, den erfindungsgemäßen Bindemitteln als weitere Zusatzstoffe feinteilige pulverförmige Metalle zuzusetzen. Hierbei ist es ferner von Vorteil, daß dieser Zusatz an feinteiligen, pulverförmigen Metallen ausgewählt wird im Hinblick auf die zu verklebende Metalloberfläche. Mit anderen Worten bedeutet dies, daß als Metall-Zusatz ein feinteiliges Stahlpulver ausgewählt wird, sofern man Stahloberflächen zu verkleben wünscht. Für andere zu verklebende Metall-Substrate gilt dies in entsprechender Weise.

Gemäß einer weiteren bevorzugten Ausführungsform der vorliegenden Erfindung enthalten die Bindemittel demnach zusätzlich 10 bis 30 Gew.-%, bezogen auf die wäßrige Alkalimetallsilicatlösung, an feinteiligen, pulverförmigen Metallen, die insbesondere ausgewählt sind aus Eisen, Stahl, Chrom, Zink, Aluminium oder Kupfer. Auch hierbei ist es im Sinne der Erfindung von Vorteil, daß die den Bindemitteln zugesetzten pulverförmigen Metalle in möglichst feinteiliger Form eingesetzt werden. Im Sinne der Erfindung ist es somit bevorzugt, daß die Bindemittel 15 bis 20 Gew.-%, bezogen auf die wäßrige Alkalimetallsilicatlösung, an feinteiligen, pulverförmigen Metallen enthalten, die eine Korngröße im Bereich von 10 bis 40 µm, insbesondere im Bereich von 10 bis 30 µm, aufweisen.

Darüber hinaus können die erfindungsgemäßen Bindemittel gegebenenfalls - je nach Einsatzzweck - noch weitere Zusatzstoffe oder Füllmittel enthalten, wie sie aus dem Stand der Technik bekannt sind. Beispielhaft seien hier als weitere Zusatzstoffe oder Füllstoffe genannt: Quarzsand, Ton, Talkum, Bentonit, Glaspulver, Asbest, Kaolin, Schichtsilicate oder Metalloxide, wie Aluminiumoxid, Zinkoxid oder Magnesiumoxid. Der Fachmann wird hierbei die Auswahl dieser Zusätze gleichfalls im Hinblick auf die zu verklebenden Substrate treffen. Auch die Einsatzmenge derartiger Zusatzstoffe oder Füllstoffe richtet sich insbesondere nach dem jeweiligen Einsatzzweck. In der Regel kommen hier 1 bis 10 Gew.-%, gleichfalls bezogen auf die wäßrige Alkalimetallsilicatlösung, in Frage.

Zur Herstellung der erfindungsgemäßen Bindemittel geht man in der Regel in der Weise vor, daß man die einzusetzende wäßrige Alkalimetallsilicatlösung, das heißt die Wasserglas-Basis, vorlegt und die erfindungsgemäßen Zusatzstoffe sowie gegebenenfalls weitere Zusatzstoffe in die Wasserglas lösung unter Rühren einbringt. Hierbei sind keine besonderen Maßnahmen zu beachten. Wichtig ist es allerdings, daß vor der Applikation der erfindungsgemäßen Bindemittel auf die jeweiligen Substratoberflächen die dem Bindemittel beigefügten Zusatzstoffe gleichmäßig im Bindemittel verteilt sind. Somit kann es gegebenenfalls - insbesondere nach längere Lagerung der Bindemittel - erforderlich sein, die Zusatzstoffe im Bindemittel durch erneutes Aufrühren gut zu verteilen.

Für die Applikation der erfindungsgemäßen Bindemittel auf die jeweiligen Substratoberflächen bedarf es gleichfalls keiner besonderen Maßnahmen. In der Regel werden die erfindungsgemäßen Bindemittel auf die jeweiligen Substratoberflächen in gleichmäßiger Verteilung aufgebracht. Dabei ist es im allgemeinen vom Vorteil, daß die zu verklebenden Substratoberflächen möglichst sauber und fettfrei sind. Ein vorheriges Aufrauhen von glatten Oberflächen führt gleichfalls zu einer verbesserten Haftfähigkeit.

Die Aushärtung der erfindungsgemäßen Bindemittel erfolgt in der Regel durch anschließendes Erhitzen der miteinander verklebten Substrate. Hierbei wendet man im allgemeinen Temperaturen im Bereich von 100 bis 160 °C, vorzugsweise im Bereich von 120 bis 150 °C, an, wobei man dieses Erhitzen über einen Zeitraum von ca. 1 bis 2 Stunden, insbesondere von 1 bis 1,5 Stunden durchführt. Durch ein Erhitzen in der vorstehend umschriebenen Art und Weise wird die Aushärtung der erfindungsgemäßen Bindemittel wesentlich beschleunigt; darüber hinaus kann die Aushärtung der Bindemittel natürlich auch durch längere Lagerung der miteinander verklebten Substrate bei Raumtemperatur erfolgen.

Mit den erfindungsgemäßen Bindemitteln oder Klebstoffen lassen sich eine Vielzahl von Substratoberflächen miteinander verkleben. Im Sinne der Erfindung finden derartige Bindemittel jedoch vorzugsweise Verwendung zum Verkleben von Metallen, Keramik und/oder Glas. Als Metalle seien hier beispielhaft genannt: Eisen, Stahl, veredelter Stahl wie verzinkte, aluminierte, chromatierte oder phosphatierte Stahloberflächen, Aluminium, Zink, Chrom, Kupfer, Titan sowie Legierungen derartiger Metalle, beispielsweise Messing. Die erfindungsgemäßen Bindemittel dienen bevorzugt zur Verklebung von Oberflächen aus Stahl oder Aluminium.

Weitere geeignete Anwendungsgebiete der erfindungsgemäßen Bindemittel sind Verklebungen von Glasfaservliesen, sowohl miteinander als auch mit Metalloberflächen, beispielsweise Aluminium. So können zum Beispiel Filtermatten aus Glasfaservlies in Aluminiumrahmen geklebt werden, wobei äußerst temperaturbeständige und luftdichte Verklebungen resultieren.

Natürlich ist es auch möglich, die erfindungsgemäßen Bindemittel zum Verkleben anderer Substrate, beispielsweise von Holz- oder Kunststoffoberflächen oder Textilfasern, zu verwenden. Weitere geeignete Anwendungsgebiete für die erfindungsgemäßen Bindemittel sind in der Elektroindustrie die isolierende Verklebung von Stromführenden Drähten, in der Lampenindustrie die Sokelverklebung (Glas/Metall), im Ofenbau die Verklebung von keramischen Isolationsmaterialien sowie in der Glasindustrie die Schutzbeschichtung für Glaspreßformen. Der Fachmann wird hier je nach Anwendungsgebiet - außer den erfindungsgemäß zu verwendenden Zusatzstoffen - jeweils weitere Zusatzstoffe oder Füllmittel auswählen.

### Beispiele

Mit den in den nachstehenden Beispielen 1 bis 12 und Vergleichsbeispielen 1 bis 12 angegebenen Bindemittelformulierungen auf Wasserglas-Basis wurden Stahlbleche verklebt und anschließend - nach Aushärtung des Bindemittels - die Qualität der Verklebung, das heißt die Klebkraft, durch Bestimmung der Zugscherfestigkeit überprüft.

Es wurden mit Dichlormethan gereinigte Stahlbleche (Typ: St 1203, DIN 1541) mit den Abmessungen 100 mm Länge, 25 mm Breite und 1,5 mm Dicke verwendet. Durch eine einschnittige Überlappungslänge zweier Bleche von 10 mm entstand jeweils eine Klebefläche von 250 mm².

Als Wasserglas-Basis der Bindemittelformulierungen wurden handelsübliche Wasserglaslösungen der Fa. Henkel KGaA, Düsseldorf, eingesetzt:
- Kaliwasserglas 35, Molverhältnis SiO₂:K₂O=(3,45 bis 3,5):1, Feststoffgehalt 33,9 bis 35,1 Gew.-%;
- Natronwasserglas 48/50, Molverhältnis SiO₂:Na₂O=(2,79 bis 2,89):1,
   Feststoffgehalt 44,7 bis 46,3 Gew.-%.

Die jeweiligen Zusatzstoffe der einzelnen Bindemittelformulierungen sind den nachstehenden Beispielen beziehungsweise Vergleichsbeispielen zu entnehmen.

Zur Herstellung der einzelnen Bindemittelformulierungen wurden die jeweiligen Zusatzstoffe in die vorgelegte Wasserglaslösung eingetragen und gut darin verrührt. Als erfindungsgemäß zu verwendende Doppelschichthydroxid-Verbindungen wurden ein handelsüblicher Hydrotalcit (Fa. Giulini) sowie ein calcinierter Hydrotalcit (hergestellt durch Erhitzen von handelsüblichem Hydrotalcit auf 500 °C im Verlauf von 2 Stunden, Massenverlust ca. 40 Gew.-%) eingesetzt.

Die jeweiligen Bindemittelformulierungen wurden mit einem Spatel in dünner Schicht beidseitig auf die zu verklebenden Stahlbleche aufgetragen und anschließend ausgehärtet. Die Aushärtung der Verklebung erfolgte durch Erhitzen der verklebten Stahlbleche für die Dauer einer Stunde auf 120 °C (Beispiele 1 bis 4, 9 bis 12 sowie Vergleichsbeispiele 1 bis 8, 11 und 12) beziehungsweise auf 150 °C (Beispiele 5 bis 8 sowie Vergleichsbeispiele 9 und 10).

Nach Abkühlung der verklebten Stahlbleche auf Raumtemperatur erfolgte jeweils die Überprüfung der Qualität der Verklebung durch Ermittlung der Zugscherfestigkeit (in N/mm²) in Anlehnung an DIN 53 283. Hierbei wurde die Beanspruchung der Verklebung durch Zugkräfte in Richtung der Klebeflächen gemessen. Als Zugprüfmaschine diente ein Gerät der Fa. Frank. Die Zuggeschwindigkeit betrug jeweils 15 mm/Minute. Die erhaltenen Daten sind in den einzelnen Tabellen wiedergegeben. Die dort angegebenen Werte sind jeweils Mittelwerte aus 5 Einzelmessungen.

### Beispiel 1

10 g Kaliwasserglas 35,
1 g Hydrotalcit, Korngröße 30 µm

### Vergleichsbeispiel 1

10 g Kaliwasserglas 35,
ohne Zusatzstoffe

### Vergleichsbeispiel 2

10 g Kaliwasserglas 35,
2 g Kaolin, Korngröße 60 µm (Fa. Riedel de Haen AG)

### Vergleichsbeispiel 3

10 g Kaliwasserglas 35,
2 g gamma-Tonerde (Al₂O₃), Korngröße 40 µm (Fa. Merck)

### Vergleichsbeispiel 4

10 g Kaliwasserglas 35,
1 g Bentone EW, Korngröße 1 µm (Fa. Cronos Titan GmbH)

**Tabelle 1**

| Beispiel | Zugscherfestigkeit (N/mm²) |
|---|---|
| 1 | 3,3 |
| Vgl. 1 | 2,2 |
| Vgl. 2 | 2,4 |
| Vgl. 3 | 2,3 |
| Vgl. 4 | 0,6 |

### Beispiel 2

10 g Natronwasserglas 48/50,
1 g Hydrotalcit, Korngröße 30 µm

### Beispiel 3

10 g Natronwasserglas 48/50,
1 g Hydrotalcit, Korngröße 5 µm

### Beispiel 4

10 g Natronwasserglas 48/50,
1 g calcinierter Hydrotalcit, Korngröße 30 µm

### Vergleichsbeispiel 5

10 g Natronwasserglas 48/50,
ohne Zusatzstoffe

### Vergleichsbeispiel 6

10 g Natronwasserglas 48/50,
1,5 g Kaolin, Korngröße 60 µm

### Vergleichsbeispiel 7

10 g Natronwasserglas 48/50,
2 g Kaolin, Korngröße 60 µm

### Vergleichsbeispiel 8

10 g Natronwasserglas 48/50,
2 g Bentone EW, Korngröße 1 µm

**Tabelle 2**

| Beispiel | Zugscherfestigkeit (N/mm²) |
|---|---|
| 2 | 3,8 |
| 3 | 5,0 |
| 4 | 3,7 |
| Vgl. 5 | 3,0 |
| Vgl. 6 | 3,1 |
| Vgl. 7 | 1,3 |
| Vgl. 8 | 2,1 |

### Beispiel 5

10 g Natronwasserglas 48/50,
0,5 g Hydrotalcit, Korngröße 30 µm,
2 g Stahlpigment, Korngröße 30 µm (Stay-Steel-Pigment F, Fa. Langer & Co, Ritterhude/Ihlpohl)

### Beispiel 6

10 g Natronwasserglas 48/50,
0,5 g Hydrotalcit, Korngröße 30 µm,
2 g Stahlpigment, Korngröße 30 µm (Stay-Steel-Pigment FW, Fa. Langer & Co, Ritterhude/Ihlpohl)

### Beispiel 7

10 g Natronwasserglas 48/50,
1,5 g Hydrotalcit, Korngröße 30 µm,
2 g Stahlpigment, Korngröße 30 µm (Stay-Steel-Pigment F)

### Beispiel 8

10 g Natronwasserglas 48/50,
1,5 g Hydrotalcit, Korngröße 30 µm,
2 g Stahlpigment, Korngröße 30 µm (Stay-Steel-Pigment FW)

### Vergleichsbeispiel 9

10 g Natronwasserglas 48/50,
2 g Stahlpigment, Korngröße 30 µm (Stay-Steel-Pigment F)

### Vergleichsbeispiel 10

10 g Natronwasserglas 48/50,
1,5 g Bentone EW, Korngröße 1 µm,
2 g Stahlpigment, Korngröße 30 µm (Stay-Steel-Pigment F)

**Tabelle 3**

| Beispiel | Zugscherfestigkeit (N/mm²) |
|---|---|
| 5 | 5,0 |
| 6 | 4,5 |
| 7 | 4,6 |
| 8 | 5,1 |
| Vgl. 9 | 4,2 |
| Vgl. 10 | 4,2 |

### Beispiel 9

10 g Natronwasserglas 48/50,
0,25 g Hydrotalcit, Korngröße 30 µm,
2 g Stahlpigment, Korngröße 30 µm (Stainless Steel Flakes, Fa. Langer & Co, Ritterhude/Ihlpohl)

### Beispiel 10

10 g Natronwasserglas 48/50,
0,5 g Hydrotalcit, Korngröße 30 µm,
2 g Stahlpigment, Korngröße 30 µm (Stainless Steel Flakes)

### Beispiel 11

10 g Natronwasserglas 48/50,
0,5 g Hydrotalcit, Korngröße 5 µm,
2 g Stahlpigment, Korngröße 30 µm (Stainless Steel Flakes)

### Beispiel 12

10 g Natronwasserglas 48/50,
0,5 g calcinierter Hydrotalcit, Korngröße 30 µm,
2 g Stahlpigment, Korngröße 30 µm (Stainless Steel Flakes)

### Vergleichsbeispiel 11

10 g Natronwasserglas 48/50,
2 g Stahlpigment, Korngröße 30 µm (Stainless Steel Flakes)

### Vergleichsbeispiel 12

10 g Natronwasserglas 48/50,
1 g Bentone EW, Korngröße 1 µm,
2 g Stahlpigment, Korngröße 30 µm (Stainless Steel Flakes)

**Tabelle 4**

| Beispiel | Zugscherfestigkeit (N/mm²) |
|---|---|
| 9 | 4,3 |
| 10 | 3,3 |
| 11 | 6,2 |
| 12 | 5,4 |
| Vgl. 11 | 1,9 |
| Vgl. 12 | 1,1 |

Die vorstehenden Beispiele zeigen, daß mit den erfindungsgemäßen Bindemitteln stets höhere Zugscherfestigkeitswerte resultieren als mit Bindemittel auf Wasserglas-Basis, die entweder keine oder ausschließlich aus dem Stand der Technik bekannte Zusatzstoffe enthalten.

Mit dem in den nachstehenden Beispielen 13 bis 15 angegebenen Bindemittelformulierungen auf Wasserglas-Basis wurden Aluminiumbleche verklebt und anschließend - nach Aushärtung des Bindemittels - wiederum die erzielte Klebkraft durch Bestimmung der Zugscherfestigkeit überprüft.

Es wurden gereinigte Aluminiumbleche (Werkstoffnummer 32 315 nach DIN 17007) mit den Abmessungen 100 mm Länge, 25 mm Breite und 3 mm Dicke verwendet; bezüglich der Klebefläche gelten die vorstehenden Angaben. Eingesetzt wurden:
Natronwasserglas 48/50 sowie ein handelsüblicher Hydrotalcit, wiederum gemäß den vorstehenden Angaben. Die Aushärtung der jeweiligen Verklebungen erfolgte durch Erhitzen der verklebten Aluminiumbleche für die Dauer einer Stunde auf 130 °C. Im übrigen erfolgte die Durchführung dieser Beispiele analog den vorstehenden Angaben.

### Beispiel 13

10 g Natronwasserglas 48/50
0,5 g Hydrotalcit, Korngröße 5 µm
2 g Stahlpigment, Korngröße 30 µm (Stay-Steel-Pigment FW).

### Beispiel 14

10 g Natronwasserglas 48/50
1 g Hydrotalcit, Korngröße 5 µm.

### Beispiel 15

10 g Natronwasserglas 48/50
0,75 g Hydrotalcit, Korngröße 5 µm

**Tabelle 5**

| Beispiel | Zugscherfestigkeit (N/mm²) |
|---|---|
| 13 | 6,6 |
| 14 | 4,6 |
| 15 | 3,8 |

## Patentansprüche

1. Bindemittel auf Basis wäßriger Alkalimetallsilicatlösungen, die ein Molverhältnis SiO₂ zu M₂O im Bereich von (2,0 bis 4,1):1 und einen Feststoffgehalt im Bereich von 27 bis 56 Gew.-% aufweisen, wobei M Natrium, Kalium und/oder Lithium bedeuten, mit einem Gehalt an anorganischen Zusatzstoffen, dadurch gekennzeichnet, daß sie 2 bis 20 Gew.-%, bezogen auf die Alkalimetallsilicatlösung, an Doppelschichthydroxid-Verbindungen der allgemeinen Formel (I)
[M^{II}₁₋ₓM^{III}ₓ(OH)₂]Aₓ . mH₂O (I)
worin M^{II} mindestens ein zweiwertiges Metallkation, M^{III} mindestens ein dreiwertiges Metallkation, A das Äquivalent eines Anions einer ein- oder mehrbasischen Säure, 1/6 ≦ x ≦ 1/2 und 0 ≦ m ≦ 1 bedeuten, und/oder zuvor calcinierte Doppelschichthydroxid-Verbindungen der allgemeinen Formel (I) enthalten.

2. Bindemittel nach Anspruch 1, dadurch gekennzeichnet, daß das zweiwertige Metallkation M^{II} der allgemeinen Formel (I) ausgewählt ist aus Magnesium, Calcium, Mangan, Zink und Kupfer.

3. Bindemittel nach Anspruch 1, dadurch gekennzeichnet, daß das dreiwertige Metallkation M^{III} der allgemeinen Formel (I) ausgewählt ist aus Eisen oder Aluminium.

4. Bindemittel nach Anspruch 1, dadurch gekennzeichnet, daß das Anion A der allgemeinen Formel (I) ausgewählt ist aus Carbonat-, Sulfat-, Chlorid-, Nitrat- und Phosphationen.

5. Bindemittel nach Anspruch 1, dadurch gekennzeichnet, daß als Doppelschichthydroxid-Verbindung der allgemeinen Formel (I) Hydrotalcit oder ein zuvor calcinierter Hydrotalcit eingesetzt wird.

6. Bindemittel nach Ansprüchen 1 bis 5, dadurch gekennzeichnet, daß die wäßrige Alkalimetallsilicatlösung ein Molverhältnis von SiO₂ zu M₂O im Bereich von (2,0 bis 3,5):1 und einen Feststoffgehalt im Bereich von 33 bis 56 Gew.-% aufweist, wobei M Natrium oder Kalium bedeutet.

7. Bindemittel nach Anspruch 6, dadurch gekennzeichnet, daß die wäßrige Alkalimetallsilicatlösung ein Molverhältnis SiO₂ zu Na₂O im Bereich von (2,0 bis 3,2):1 und einen Feststoffgehalt im Bereich von 41 bis 56 Gew.-% aufweist.

8. Bindemittel nach Ansprüchen 1 bis 7, dadurch gekennzeichnet, daß sie 5 bis 15 Gew.-%, bezogen auf die wäßrige Alkalimetallsilicatlösung, an feinteiligen Doppelschichthydroxid-Verbindungen der allgemeinen Formel (I) oder zuvor calcinierte Doppelschichthydroxid-Verbindungen dieser Formel enthalten.

9. Bindemittel nach Ansprüchen 1 bis 8, dadurch gekennzeichnet, daß die feinteiligen Doppelschichthydroxid-Verbindungen der allgemeinen Formel (I) oder die zuvor calcinierten Doppelschichthydroxid-Verbindungen dieser Formel eine Korngröße im Bereich von 1 bis 30 µm, insbesondere von 3 bis 10 µm, aufweisen.

10. Bindemittel nach Ansprüchen 1 bis 9, dadurch gekennzeichnet, daß sie zusätzlich 10 bis 30 Gew.-%, bezogen auf die wäßrige Alkalimetallsilicatlösung, an feinteiligen, pulverförmigen Metallen, ausgewählt aus Eisen, Stahl, Chrom, Zink, Aluminium oder Kupfer, enthalten.

11. Bindemittel nach Anspruch 10, dadurch gekennzeichnet, daß sie 15 bis 20 Gew.-%, bezogen auf die wäßrige Alkalimetallsilicatlösung, an feinteiligen, pulverförmigen Metallen, die eine Korngröße im Bereich von 10 bis 40 µm aufweisen, enthalten.

12. Verwendung von Bindemitteln nach Ansprüchen 1 bis 11 zum Verkleben von Metallen, Keramik und/oder Glas.

## Claims

1. Binders based on aqueous alkali metal silicate solutions in which the molar ratio of SiO₂ to M₂O (M = sodium, potassium and/or lithium) is of the order of (2.0 to 4.1):1 and which have a solids content of 27 to 56% by weight, with a content of inorganic additives, characterized in that they contain 2 to 20% by weight, based on the alkali metal silicate solution, of double layer hydroxide compounds corresponding to general formula (I):
[M^{II}₁₋ₓM^{III}ₓ(OH)₂]Aₓ · mH₂O (I)
in which M^{II} is at least one divalent metal cation, M^{III} is at least one trivalent metal cation, A is the equivalent of an anion of a monobasic or polybasic acid, 1/6 ≦ x ≦ 1/2 and 0 ≦ m ≦ 1, and/or precalcined double layer hydroxide compounds corresponding to general formula (I).

2. Binders as claimed in claim 1, characterized in that the metal cation M^{II} in general formula (I) is selected from magnesium, calcium, manganese, zinc and copper.

3. Binders as claimed in claim 1, characterized in that the trivalent metal cation M^{III} in general formula (I) is selected from iron or aluminium.

4. Binders as claimed in claim 1, characterized in that the anion A in general formula (I) is selected from carbonate, sulfate, chloride, nitrate and phosphate ions.

5. Binders as claimed in claim 1, characterized in that hydrotalcite or a precalcined hydrotalcite is used as the double layer hydroxide compound corresponding to general formula (I).

6. Binders as claimed in claims 1 to 5, characterized in that the aqueous alkali metal silicate solution has a molar ratio of SiO₂ to M₂O (M = sodium or potassium) of the order of (2.0 to 3.5):1 and a solids content of 33 to 56% by weight.

7. Binders as claimed in claim 6, characterized in that the aqueous alkali metal silicate solution has a molar ratio of SiO₂ to Na₂O of the order of (2.0 to 3.2):1 and a solids content of 41 to 56% by weight.

8. Binders as claimed in claims 1 to 7, characterized in that they contain 5 to 15% by weight, based on the aqueous alkali metal silicate solution, of fine-particle double layer hydroxide compounds corresponding to general formula (I) or precalcined double layer hydroxide compounds corresponding to that formula.

9. Binders as claimed in claims 1 to 8, characterized in that the fine-particle double layer hydroxide compounds corresponding to general formula (I) or the precalcined double layer hydroxide compounds corresponding to that formula have a particle size of 1 to 30 µm and, more particularly, 3 to 10 µm.

10. Binders as claimed in claims 1 to 9, characterized in that they additionally contain 10 to 30% by weight, based on the aqueous alkali metal silicate solution, of fine-particle powder-form metals selected from iron, steel, chromium, zinc, aluminium or copper.

11. Binders as claimed in claim 10, characterized in that they contain 15 to 20% by weight, based on the aqueous alkali metal silicate solution, of fine-particle powder-form metals with a particle size of 10 to 40 µm.

12. The use of the binders claimed in claims 1 to 11 for bonding metals, ceramics and/or glass.

## Revendications

1. Liants à base de solutions aqueuses de silicates de métaux alcalins, qui présentent un rapport molaire entre le SiO₂ et le M₂O, compris dans l'intervalle de (2,0 à 4,1):1 et une concentration en matières solides située dans la plage de 27 à 56 % en poids, M représentant le sodium, le potassium et/ou le lithium, avec un contenu en additifs inorganiques, qui sont caractérisés en ce qu'ils renferment 2 à 20 % en poids par rapport à la solution de silicate de métal alcalin, de composés hydroxyde à double couche de la formule générale (I)
[M^{II}₁₋ₓM^{III}ₓ(OH)₂]Aₓ · mH₂O (I)
dans laquelle M^{II} représente au moins un cation métallique bivalent, M^{III}, au moins un cation métallique trivalent, A, l'équivalent d'un anion d'un acide mono- ou polybasique, 1/6 ≦ x ≦ 1/2 et O ≦ m ≦ 1, et/ou qui renferment des composés hydroxyde à double couche préalablement calcinés de la formule générale (I).

2. Liants selon la revendication 1, caractérisés en ce que le cation métallique bivalent M^{II} de la formule générale (I) est sélectionné parmi le groupe constitué du magnésium, du calcium, du manganèse, du zinc et du cuivre.

3. Liants selon la revendication 1, caractérisés en ce que le cation métallique trivalent M^{III} de la formule générale (I) est choisi entre le fer et l'aluminium.

4. Liants selon la revendication 1, caractérisés en ce que l'anion A de la formule générale (I) est choisi parmi le groupe formé des ions carbonate, sulfate, chlorure, nitrate et phosphate.

5. Liants selon la revendication 1, caractérisés en ce que l'on utilise comme composé hydroxyde à double couche de la formule générale (I), de l'hydrotalcite ou une hydrotalcite préalablement calcinée.

6. Liants selon les revendications 1 à 5, caractérisés en ce que la solution aqueuse de silicate de métal alcalin présente un rapport molaire entre le SiO₂ et le M₂O, compris dans l'intervalle de (2,0 à 3,5 ):1 et une concentration en matières solides située dans la plage de 33 à 56 % en poids, M représentant le sodium ou le potassium

7. Liants selon la revendication 6, caractérisés en ce que la solution aqueuse de silicate de métal alcalin présente un rapport molaire entre le SiO₂ et le Na₂O, compris dans l'intervalle de (2,0 à 3,2):1 et une concentration en matières solides située dans l'intervalle de 41 à 56 % en poids.

8. Liants selon les revendications 1 à 7, caractérisés en ce qu'ils contiennent 5 à 15 % en poids - par rapport à la solution aqueuse de silicate de métal alcalin - de composés hydroxyde à double couche à fines particules de la formule générale (I) ou de composés hydroxyde à double couche préalablement calcinés de cette même formule.

9. Liants selon les revendications 1 à 8, caractérisés en ce que les composés hydroxyde à double couche à fines particules de la formule générale (I), ou les composés hydroxyde à double couche préalablement calcinés de cette même formule, présentent une grosseur de grain comprise dans l'intervalle de 1 à 30 µm, en particulier dans l'intervalle de 3 à 10 µm.

10. Liants selon les revendications 1 à 9, caractérisés en ce qu'ils contiennent en plus 10 à 30 % en poids - par rapport à la solution aqueuse de silicate de métal alcalin - de métaux en poudre à fines particules, qui sont sélectionnés parmi le groupe constitué du fer, de l'acier, du chrome, du zinc, de l'aluminium et du cuivre.

11. Liants selon les revendications 1 à 10, caractérisés en ce qu'ils contiennent 15 à 20 % en poids - par rapport à la solution aqueuse de silicate de métal alcalin - de métaux en poudre à fines particules, qui présentent une grosseur de grain comprise dans l'intervalle de 10 à 40 µm.

12. Utilisation des liants selon les revendications 1 à 11 pour le collage des métaux, de la céramique et/ou du verre.
